(19) Europäisches Patentamt
European Patent Office
Office européen des brevets

(11) Numéro de publication: **0 027 670**
**B1**

(12) **FASCICULE DE BREVET EUROPEEN**

(45) Date de publication du fascicule du brevet: **09.11.83**

(51) Int. Cl.³: **D 21 C 5/02**

(21) Numéro de dépôt: **80200961.3**

(22) Date de dépôt: **13.10.80**

(54) **Procédé pour la régénération des vieux papiers.**

(30) Priorité: **23.10.79 FR 7926581**

(43) Date de publication de la demande: **29.04.81 Bulletin 81/17**

(45) Mention de la délivrance du brevet: **09.11.83 Bulletin 83/45**

(84) Etats contractants désignés: **AT BE CH DE FR GB IT LI NL SE**

(56) Documents cités:
**FR - A - 492 195**
**FR - E - 32 789**
**GB - A - 1 062 182**
**US - A - 2 200 622**

(73) Titulaire: **INTEROX Société anonyme dite:, Rue du Prince Albert, 33, B-1050 Bruxelles (BE)**

(72) Inventeur: **De Ceuster, Jean, Rue R. De Grimberghe, 3, B-1800 Vilvoorde (BE)**
Inventeur: **Duprez, Paul, Rue des Prés-communs, 26, B-1120 Bruxelles (BE)**

(74) Mandataire: **Meyers, Liliane et al, Solvay & Cie Département de la propriété industrielle 310, rue de Ransbeek, B-1120 Bruxelles (BE)**

EP 0 027 670 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

BUNDESDRUCKEREI BERLIN

# Procédé pour la régénération des vieux papiers

La présente invention concerne un procédé pour la régénération des vieux papiers de manière à pouvoir les recycler sous forme d'une pâte.

Les vieux papiers de récupération constituent une source de matière première importante pour l'industrie papetière. Ces vieux papiers sont désintégrés en phase aqueuse, le plus souvent dans un pulpeur, de manière à obtenir une pâte qui est utilisée en général pour la fabrication de papiers et de cartons d'emballage ou de papier journal. Etant donné que le taux d'utilisation des fibres récupérées dans les produits d'emballage est dégà très élevé, on a également envisagé d'autres débouchés pour les vieux papiers tels que la fabrication de papier impression-écriture ou celle de papier »tissue«. Dans ce cas, il est important de disposer d'une pâte présentant un degré suffisant de blancheur. Un degré de blancheur satisfaisant peut être atteint en ayant recours à des traitements complémentaires de désencrage et/ou de blanchiment. D'autres traitements encore (rétention en cuve, élimination des impuretés lourdes et légères, dépastillage, raffinage, etc) sont souvent inclus dans les cycles de régénération.

On a ainsi proposé de régénérer des vieux papiers en plusieurs étapes dont une désintégration en présence d'eau douce et de détergents non ioniques suivie d'un désencrage par lavage de le pâte obtenue (brevet français 13 63 874 déposé le 28 septembre 1961 au nom de The Hollified Corp.). Ce type de procédé, s'il permet un bon décrochage des encres, présente cependant certains inconvénients sérieux dus à la présence de quantités d'encres fort impotantes dans les eaux de lavage. En effet, si on veut maintenir un niveau de blancheur suffisant, celles-ci ne peuvent être recyclées qu'en quantité limitée, ce qui entraîne des consommations en eau excessives. En outre, il y a lieu de prévoir sur les circuits des eaux de lavage des traitements d'élimination des encres qui rendent le procédé fort complexe. L'élimination des résidus riches en encre provenant de ces traitements est particulièrement malaisée du fait de la nécessité de protéger l'environnement. Enfin, il se forme des dépots dans les circuits de circulation des eaux de lavage.

L'invention a pour but de fournir un procédé pour la régénération des vieux papiers qui permet d'éviter les inconvénients cités ci-dessus et plus particulièrement d'éviter la formation d'effluents aqueux riches en encres. L'invention permet en outre d'obtenir une pâte de blancheur améliorée qui peut être utilisée pour la fabrication de papier-impression tel que le papier journal.

L'invention concerne à cet effet un procédé pour la régénération des vieux papiers sans désencrage qui comprend la mise en pâte des vieux papiers en présence d'eau douce et en l'absence substantielle d'agents tensioactifs anioniques suivie de l'addition à la pâte ainsi obtenue d'un composé capable de libérer en solution aqueuse des ions ayant une charge positive égale ou supérieure à deux.

Divers types de tels composés peuvent être mis en oeuvre selon l'invention. En général, le composé ajouté à la pâte est choisi parmi les composés des éléments des Groupes IIa et IIIa du Tableau périodique des éléments. De préférence, on met en oeuvre un composé capable de libérer en solution aqueuse des ions calcium ou aluminium. Des résultats particulièrement bons ont été obtenus en ajoutant à la pâte un composé capable de libérer en solution aqueuse des ions calcium. Divers types de composés capables de libérer les ions précités peuvent être utilisés selon l'invention. En général, ils sont choisis parmi les composés dont la solubilité dans l'eau est d'au moins 0,01 g par l et de préférence d'au moins 0,05 g par l. De bons résultats ont été obtenus en utilisant des sels minéraux tels que des halogénures, et plus particulièrement des chlorures, des oxydes et des hydroxydes. Avantageusement, on met en oeuvre du chlorure de calcium, de l'oxyde de calcium, ou de l'hydroxyde de calcium.

La quantité de composé capable de libérer en solution aqueuse des ions ayant une charge positive égale ou supérieure à deux à mettre en oeuvre peut varier dans de larges limites. Elle est en général choisie entre 0,01 et 20 g par l et de préférence entre 0,05 et 10 g par l d'eau mise en oeuvre.

Lors de l'addition du composé de l'invention, la pâte est substantiellement exempte d'agents tensioactifs anioniques de manière à éviter la formation de sels de ces agents tensioactifs anioniques avec les ions. Ces sels sont en effet susceptibles de favoriser la séparation des encres. Par pâtes substantiellement exemptes d'agents tensioactifs anioniques, on entend désigner des pâtes contenant moins de 0,1% et de préférence moins de 0,05% en poids d'agent tensioactif anionique par rapport au poids de pâte sèche.

La mise en pâte peut se faire par désintégration des vieux papiers selon les diverses techniques connues en elles-mêmes. Divers appareils convenant pour cet usage peuvent être utilisés. On peut ainsi utiliser des broyeurs fonctionnant à haute consistance de pâte. Des exemples d'appareils de ce type sont décrits dans Tappi Monograph Series n°31, 1967, Deinking Waste Paper. Debons résultats ont été obtenus dans les pulpeurs. La consistance des pâtes peut varier dans de larges limites selon le type d'appareil utilisé. En général, elle est comprise entre 1 et 50%. En pulpeur, on utilise en général des consistances de pâtes comprises entre 1 et 10%.

L'eau utilisée pour la mise en pâte des vieux

papiers selon l'invention est de l'eau douce ou de l'eau adoucie par l'addition d'un additif susceptible de supprimer la dureté de l'eau. On peut ainsi ajouter à l'eau mise en oeuvre du carbonate de sodium ou tout autre additif remplissant la même fonction. Par eau douce, on entend désigner l'eau dont la dureté est inférieure à 2 degré et de préférence inférieure à 1 degré de dureté allemand. On peut également, de façon avantageuse, utiliser de l'eau de recyclage dont on a éliminé les composés susceptibles de libérer des ions tels que définis ci-dessus.

La température dans l'appareil utilisé pour la désintégration est habituellement comprise entre 20 et 130°C. Lorsqu'on opère en pulpeur, on utilise en général des températures comprises entre 30 et 90°C. Le temps de séjour dans l'appareil de désintégration peut varier dans de larges limites selon le type d'appareil utilisé. Il est compris habituellement entre 10 sec et 3 heures. En pulpeur, il est compris entre 5 et 120 minutes en général.

On peut introduire dans l'appareil utilisé pour la désintégration des vieux papiers un ou plusieurs agents complexants. Divers types d'agents complexants peuvent être utilisés à cette fin.

On peut ainsi utiliser des acides ou des sels d'acides choisis parmi les acides éthylènediaminetétraacétique, diéthylènediaminepentaacétique, gluconique, polyitaconique, tartrique, citrique et phosphonique ainsi que les dérives substitués de l'acide phosphonique tels que l'acide diéthylènetriaminepenta(méthylènephosphonique). Les sels de sodium de ces acides conviennent bien. On peut également utiliser des polymères hydroxycarboxylés tels que décrits dans la demande de brevet allemand 1 904 940 déposée le Ier février 1969 au nom de DEGUSSA, ainsi que des homo- ou des co-polymères hydrocycarbocylés contenant des unités monomériques de formule

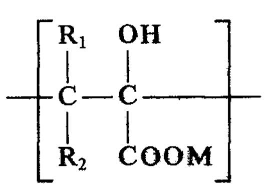

où $R_1$ et $R_2$ représentent l'hydrogène ou un groupement alkyle 30 comprenant de 1 à 3 atomes de carbone pouvant être substitués par un groupe hydroxyle ou par un atome d'halogène, $R_1$ et $R_2$ pouvant être identiques ou différents et où M représente un atome d'hydrogène, un atome de sodium ou de potassium ou un groupement ammonium, tels que par exemple les polymères décrits dans le brevet belge 776 705 déposé le 15 décembre 1971 au nom de SOLVAY et Cie.

Ces agents complexants peuvent être mis en oeuvre en quantités variables. En général, on utilise de 0,01 à 2% d'agent complexant par rapport au poids de vieux papiers secs.

Le procédé selon l'invention peut en outre de façon avantageuse comporter un blanchiment. Ce blanchiment peut se faire en même temps que la mise en pâte, ou il peut lui faire suite. En général, on préfère effectuer la désintégration des vieux appiers en présence d'agents de blanchiment.

L'agent de blanchiment mis en oeuvre peut être un agent réducteur ou un agent oxydant tel que les hypochlorites de métaux alcalins ou les composés peroxydés.

L'agent de blanchiment est en général un agent oxydant et de préférence un composé peroxydé. Divers types de composés peroxydés peuvent être utilisés. En général, on utilise des composés inorganiques tels que le peroxyde de sodium ou le peroxyde d'hydrogène. On utilise de préférence le peroxyde d'hydrogène.

La concentration en agent de blanchiment est en général comprise entre 0,05 et 6% et de préférence entre 0,1 et 5% du poids de vieux papiers secs.

Lorsque l'agent de blanchiment est un agent oxydant, on maintient en général, la pâte à un pH basique. Dans ce cas, on peut mettre en oeuvre un composé alcalin à la mise en pâte. Le composé alcalin peut être n'importe quel composé capable de donner à l'eau un pH alcalin. Parmi les composés utilisables figurent notamment les hydroxydes et les silicates de métaux alcalins tels que le sodium et le potassium ou leurs mélanges. L'hydroxyde de sodium convient particulièrement bien.

La concentration totale en composés alcalins est en général comprise entre 0,2 et 12% du poids de vieux papiers secs. Lorsqu'on utilise de l'hydroxyde de sodium, sa concentration est en général comprise entre 0,1 et 8%, et de préférence entre 0,2 et 5% du poids de vieux papiers secs. Si simultanément on met en oeuvre du silicate de sodium, la concentration de ce dernier est en général comprise entre 0,1 et 10% et de préférence entre 0,2 et 8% du poids total de vieux papiers secs. Lorsque l'agent oxydant présente un caractère alcalin, comme c'est le cas du peroxyde de sodium, les quantités d'autres composés alcalins à mettre en oeuvre peuvent être alors beaucoup plus faibles, voire nulles.

En outre, divers autres additifs, tels que notamment des stabilisants du composé peroxydé, peuvent être ajoutés à la pâte lorsqu'on prévoit un blanchiment au moyen d'un composé peroxydé.

Lorsque la régénération des vieux papiers comporte un blanchiment, le composé capable de libérer des ions est ajouté habituellement à la pâte à la fin du blanchiment. Si, selon un mode de réalisation préféré de l'invention, on ajoute l'agent de blanchiment directement dans un appareil de désintégration tel qu'un pulpeur, on introduit avantageusement le composé précité

dans cet appareil lorsque la désintégration est terminée avant de décharger la pâte de l'appareil. On peut également prévoir un dispositif placé à la sortie de l'appareil utilisé pour la désintégration qui permette l'introduction du composé précité dans la pâte et assure le mélange intime.

La pâte traitée selon l'invention peut ensuite, sans que cela soit indispensable, être soumise à un ou plusieurs traitements tels que l'épuration, le dépastillage et le raffinage. En général, on soumet la pâte traitée selon l'invention à une épuration pour en éliminer les impuretés solides. Divers appareils connus en eux-mêmes peuvent être utilisés à cette fin tels que des cyclones ou des tamis vibrants.

La pâte peut être ensuite envoyée dans un é épaississeur. Divers types d'épaississeurs connus en eux-mêmes peuvent être utilisés à une consistance de pâte généralement comprise entre 15 et 35% et de préférence entre 20 et 30%.

Les effluents aqueux provenant de l'âpaississeur peuvent être traité par un additif capable de former avec les ions ajoutés selon l'invention, des composés insolubles qui précipitent. On peut ainsi ajouter à cet effluent aqueux des additifs tels que le carbonate de sodium. L'effluent substantiellement exempt d'ions selon l'invention peut être recyclé à la désintégration après séparation éventuelle du précipité.

La consistance de la pâte peut être ensuite ajustée, en général à une densité de 0,1 à 5% et de préférence de 0,5 à 2% et la pâte diluée peut être envoyée dans les machines à papier.

Les effluents aqueux du procédé selon l'invention sont limpides et il n'est donc pas nécessaire d'en séparer les encres pour les recycler à l'appareil de désintégration.

L'addition du composé capable de libérer des ions à la fin de la désintégration ou, le cas échéant, à la fin du blanchiment permet en outre d'obtenir une pâte de blancheur améliorée par rapport à un procédé similaire où le composé capable de libérer des ions selon l'invention serait ajouté dès le début de la désintégration.

Lors de l'utilisation du procédé selon l'invention, on a observé un excellent défibrage des vieux papiers. Par ailleurs, la blancheur finale du produit est suffisante sans qu'il soit indispensable de recourir à des traitements supplémentaires pour améliorer la blancheur. La pâte obtenue peut être directement utilisée pour la fabrication de certains papiers-impressions tels que le papier journal ou pour la fabrication d'enveloppes colorées car on n'observe pas de trainés d'encre sur les papiers obtenus.

Afin d'illustrer l'invention sans pour autant en limiter la portée, on donne ci-après des exemples pratiques de réalisation. L'exemple 1 a été réalisé à titre de comparaison en introduisant un composé libérant des ions calcium dès le début de la désintégration. L'exemple 2 a été réalisé selon l'invention. L'exemple 3 a été réalisé à titre de comparaison sans addition de composé libérant des ions calcium.

Exemple 1

L'essai a été réalisé dans un pulpeur du type LHOMARGY de capacité de 2 l. Il a été effectué sur du papier journal (mode d'impression: typographie; teneur en cendres : 1%.

Le papier est déchiqueté à la main, avant d'être introduit dans le pulpeur. On ajoute ensuite la solution aqueuse contenant tous les réactifs à l'exception du peroxyde d'hydrogène. L'eau mise en oeuvre pour l'obtention de la pâte a une dureté calcique de 20 degrés allemands. La consistance de la pâte ainsi obtenue est de 4%. La solution est portée à la température désirée soit 50° C et elle est mélangée aux vieux papiers pendant une minute avant l'introduction de peroxyde d'hydrogène.

Le mélange réactionnel mis en oeuvre contient 1% de peroxyde d'hydrogène, 1,15% d'hydroxyde de sodium et 0,15% de poly-alphahydroxyacrylate de sodium par rapport au poids de vieux papiers secs. Le pH en début de traitement est de 10,6.

Le traitement en pulpeur dure 30 min. A la fin du traitement, la pâte retirée du pulpeur est filtrée jusqu'à une consistance de 25% puis diluée au moyen d'eau dure jusqu'à une consistance de 1%. On prélève un échantillon de pâte pour la mesure de blancheur.

La blancheur de la pâte obtenue est égale à 36,5% par rapport à la blancheur de $BaSO_4$ mesurée au moyen d'un réflectomètre Elrepho (Zeiss) équipé du filtre R 457 (norme ISO 2470).

Les effluents de filtration ne sont pas encrés et présentent une turbidité mesurée avec un photomètre SIGRIST correspondant à 1250 pp de $SiO_2$.

Exemple 2

L'essai a été réalisé dans le même appareil et sur le même type de vieux papiers que l'essai 1 en utilisant une technique similaire, mais réalisée en deux étapes.

A la première étape, on utilise de l'eau douce de dureté calcique de 0 degrés allemands.

Le mélange réactionel mis en oeuvre contient 1% de peroxyde d'hydrogène, 1% d'hydroxyde de sodium et 0,15% de poly-alphahydroxyacrylate de sodium par rapport au poids de vieux papiers secs. Le pH en début de traitement est de 11,3. Le traitement en pulpeur dure 20 min.

On ajoute ensuite, pour la seconde étape, du chlorure de calcium en quantité suffisante pour amener la dureté calcique à 20 degrés allemands, ainsi que 0,15% d'hydroxyde de sodium par rapport au poids de vieux papiers secs. Ce second traitement en pulpeur dure 10 minutes.

La blancheur de la pâte est égale à 49,4% et on n'observe pas de traînées d'encre sur le papier.

Les effluents de filtration ne sont pas encrés et presentent une turbidité correspondant à 750 ppm de $SiO_2$.

Exemple 3

L'essai a été réalisé dans des conditions similaires à celles de l'essai 1.

L'eau mise en oeuvre est de l'eau douce. Le mélange réactionnel mis en oeuvre contient 1% de peroxyde d'hydrogène, 1% d'hydroxyde de sodium et 0,15% de poly-alpha-hydroxyacrylate de sodium par rapport au poids de vieux papiers secs. Le pH en début de traitement est de 11,3.

La blancheur de la pâte obtenue est égale à 52,9% et on observe des points noirs. Les effluents de fultration sont fortement encrés et présentent une turbidité correspondant à 11 250 ppm de $SiO_2$.

**Revendications**

1. Procédé pour la régénération des vieux papiers sans désencrage, caractérisé en ce qu'il comprend la mise en pâte des vieux papiers en présence d'eau douce et en l'absence substantielle d'agents tensioactifs anioniques, suivie d'une addition à la pâte ainsi obtenue d'un composé capable de libérer en solution aqueuse des ions ayant une charge positive égale ou supérieure à deux.
2. Procédé selon la revendication 1, caractérisé en ce que l'on met en oeuvre un composé du calcium ou de l'aluminium.
3. Procédé selon la revendication 2, caractérisé en ce que l'on met en oeuvre un composé choisi parmi le chlorure de calcium, l'oxyde de calcium et l'hydroxyde de calcium.
4. Procédé selon l'une quelconque des revendications 1 à 3, caractérisé en ce que le composé est mis en oeuvre à raison de 0,01 à 20 g par l d'eau.
5. Procédé selon l'une quelconque des revendications 1 à 4, caractérisé en ce qu'on effectue la mise en pâte des vieux papiers en présence d'un agent de blanchiment.
6. Procédé selon la revendication 5, caractérisé en ce que l'agent de blanchiment est choisi parmi le peroxyde d'hydrogène et le peroxyde de sodium.
7. Procédé selon la revendication 6, caractérisé en ce que l'agent de blanchiment est le peroxyde d'hydrogène.
8. Procédé selon la revendication 7, caractérisé en ce que la mise en pâte des vieux papiers est effectuée en présence de 0,05 à 6% de peroxyde d'hydrogène et de 0,2 à 12% de composés alcalins par rapport au poids de vieux papiers secs.
9. Procédé selon l'une quelconque des revendications 1 à 8, caractérisé en ce que la mise en pâte des vieux papiers est effectuée dans un pulpeur fonctionnant avec une consistance de pâte comprise entre 1 et 10%.
10. Procédé selon la revendication 9, caractérisé en ce que le composé est introduit dans le pulpeur une fois que la pâte est désintégrée.

**Patentansprüche**

1. Verfahren zur Wiederaufbereitung von Altpapier ohne Entfärbung, dadurch gekennzeichnet, daß es umfaßt die Überführung des alten Papiers in einen Brei in Anwesenheit von weichem Wasser und in im wesentlichen Abwesenheit von anionischen oberflächenaktiven Stoffen, gefolgt von einer Zugabe zu dem so erhaltenen Brei einer Verbindung, die in der Lage ist, in wäßriger Lösung Ionen freizusetzen, die eine positive Ladung gleich oder höher als 2 besitzen.
2. Verfahren nach Anspruch 1, dadurch gekennzeichnet, daß man eine Verbindung von Calcium oder Aluminium einsetzt.
3. Verfahren nach Anspruch 2, dadurch gekennzeichnet, daß man eine Verbindung einsetzt ausgewählt unter Calciumchlorid, Calciumoxid und Calciumhydroxid.
4. Verfahren nach einem der Ansprüche 1—3, dadurch gekennzeichnet, daß die Verbindung eingesetzt wird in einem Verhältnis von 0,01—20 g je l Wasser.
5. Verfahren nach einem der Ansprüche 1—4, dadurch gekennzeichnet, daß man das Altpapier in den Brei überführt in Anwesenheit eines Bleichmittels.
6. Verfahren nach Anspruch 5, dadurch gekennzeichnet, daß das Bleichmittel ausgewählt ist unter Wasserstoffperoxid und Natriumperoxid.
7. Verfahren nach Anspruch 6, dadurch gekennzeichnet, daß das Bleichmittel Wasserstoffperoxid ist.
8. Verfahren nach Anspruch 7, dadurch gekennzeichnet, daß das Altpapier in den Brei übergeführt wird in Anwesenheit von 0,05—6% Wasserstoffperoxid und 0,2—12% der alkalischen Verbindungen bezogen auf das Trockengewicht des Altpapiers.
9. Verfahren nach einem der Ansprüche 1—8, dadurch gekennzeichnet, daß das Altpapier in den Brei übergeführt wird in einem pulper der mit einer Breikonsistenz zwischen 1 und 10% arbeitet.
10. Verfahren nach Anspruch 9, dadurch gekennzeichnet, daß die Verbindung in den pulper eingegeben wird, wenn der Brei zerkleinert ist.

**Claims**

1. Process for regenerating waste paper without de-inking, characterised in that it comprises pulping the waste paper in the presence of soft water and substantially in the absence of anionic surface-active agents, and then adding to the resulting pulp a compound capable of releasing, in aqueous solution, ions having a positive charge equal to or greater than two.
2. Process according to Claim 1, characterised in that a calcium or aluminium compound is used.

3. Process according to Claim 2, characterised in that a compound chosen from amongst calcium chloride, calcium oxide and calcium hydroxide is used.

4. Process according to any one of Claims 1 to 3, characterised in that the compound is used in an amount of 0.01 to 20 g per litre of water.

5. Process according to any one of Claims 1 to 4, characterised in that the waste paper is pulped in the presence of a bleaching agent.

6. Process according to Claim 5, characterised in that the bleaching agent is chosen from hydrogen peroxide and sodium peroxide.

7. Process according to Claim 6, characterised in that the bleaching agent is hydrogen peroxide.

8. Process according to Claim 7, characterised in that the waste paper is pulped in the presence of 0.05 to 6% of hydrogen peroxide and of 0.2 to 12% of alkaline compounds, relative to the weight of dry waste paper.

9. Process according to any one of Claims 1 to 8, characterised in that the waste paper is pulped in a pulper operating with a pulp consistency of between 1 and 10%.

10. Process according to Claim 9, characterised in that the compound is introduced into the pulper once the pulp has disintegrated.